# EUROPEAN PATENT SPECIFICATION

(11) **EP 2 934 253 B1**
(45) Date of publication and mention of the grant of the patent: **12.10.2016**
(21) Application number: 13820958.0
(22) Date of filing: 28.11.2013
(51) Int. Cl.: A47J 43/07

(54) **BLENDER DEVICE WITH ENHANCED SAFETY OF USE**
MIXERVORRICHTUNG MIT ERHÖHTER SICHERHEIT BEI DER VERWENDUNG
DISPOSITIF DE MÉLANGE À SÉCURITÉ D'UTILISATION AMÉLIORÉE

(30) Priority: 20.12.2012 IT MI20122187
(43) Date of publication of application: 28.10.2015
(73) Proprietor: Artsana S.p.A., 22070 Grandate (CO) (IT)
(72) Inventor: MERLO, Mario, I-22070 Grandate (Como) (IT)
(74) Representative: Perani, Aurelio
(86) International application number: PCT/IB2013/060468
(87) International publication number: WO 2014/097023

(56) References cited:
- EP-A1- 2 005 869

## Description

The present invention relates to a blender device according to the preamble of the main claim.

It is known that a usual blender device (or simply a blender) comprises a base, which a vessel or can suitable for containing a food to be blended or grinded can be removably coupled with. In the base an electrical motor is contained capable of moving a driving shaft projecting within a seat provided on a surface of the base (opposed to a bearing surface of the base through which it leans on a plane, like that of a table, for instance) on which the blending can is placed. This positioning is guided for instance by teeth or juts projecting from a (lower) surface of the can suitable for positioning, uniquely, within cuts located on the wall of the base seat, said cuts or hollows and teeth being arranged according to a precise angular location between them on their respective parts which they belong to.

In the lower surface, the can has a through hole in which a holder is removably located to hold a rotary blade (usually comprising several sharp portions projecting from a common "blade-holder" shaft) suitable for being inserted into the cavity of the can hence into the seat of the above mentioned base. In particular, the blade-holder shaft comprises a terminal portion present in an inner cavity of the holder and suitable for coupling with the driving shaft projecting from the seat of the base so as to be set in rotation by the latter.

Thanks to its possibility of being separated from the can, both the can and the blade-holder and the blade itself can be cleaned after their use.

In a blender of the type described above there is the risk that, after the cleaning operations, the blade-holder is not coupled correctly with the can and consequently a correct coupling of the blade-holder shaft with the driving shaft is not achieved. In this event, there is the risk that upon starting the motor said holder parts from the lower surface on the bottom of the can or vessel of the blender, which might result in situations potentially dangerous for a user who is using the blender. Such a danger exists even if the can is correctly coupled with the base.

Document EP-A-2005869 describes a blender of a type similar to that described here above. In this text, the base of the blender has a number of projections on a wall of the seat onto which the can is inserted, the latter being provided with hollows on an outer side edge thereof suitable for receiving these projections when the can is inserted on the base into its respective seat. Similar hollows are located in an outer surface of a rotary tool (blade) holder removably coupled with the can.

This text also describes a projecting section associated with the can capable of getting in a seat located in the base to give its consent to the operation of the blender; this consent is only given when said projecting section of the can penetrates into the seat of the base by operating a safety switch located under the seat in said base.

The object of the present invention is to provide an enhanced blender having an improved intrinsic safety of use.

Specifically, the object of this invention is to provide a blender in which its use is only possible if the blade-holder is correctly inserted into the seat of the base, such a correct insertion only enabling the coupling between said base and the can.

Another object is to provide a blender of the mentioned type that is all the same simple to use and to clean.

A further object is to provide a blender of the mentioned type that has a reasonable cost.

These objects and others as well which will be evident to those expert in this matter are achieved by a blender device according to the appended claims.

For a better understanding of this invention, the following drawings are attached purely by way of non-limiting example, where:

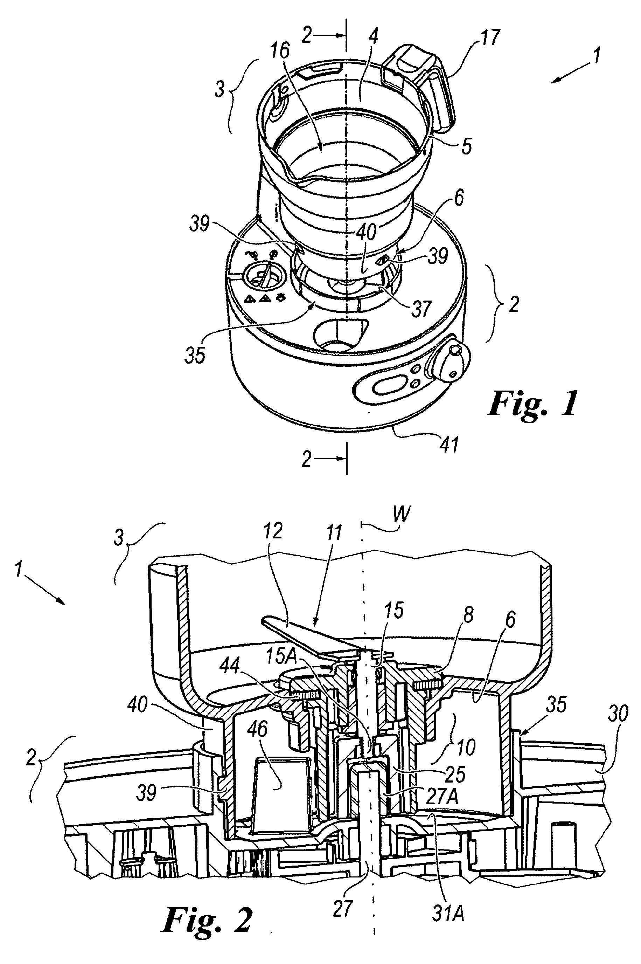

- figure 1 shows a perspective view of a blender according to the invention;
- figure 2 shows a cross-section according to cross-plane 2-2 in figure 1;

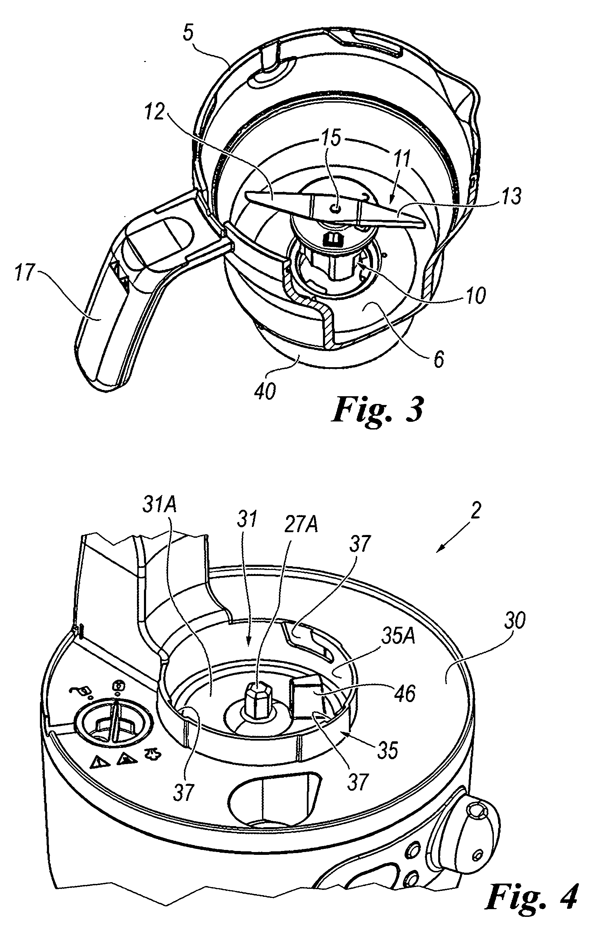

- figure 3 shows a top perspective view of a part of the blender shown in figure 1;
- figure 4 shows a partial enlarged perspective view of a different part of the blender shown in figure 1;

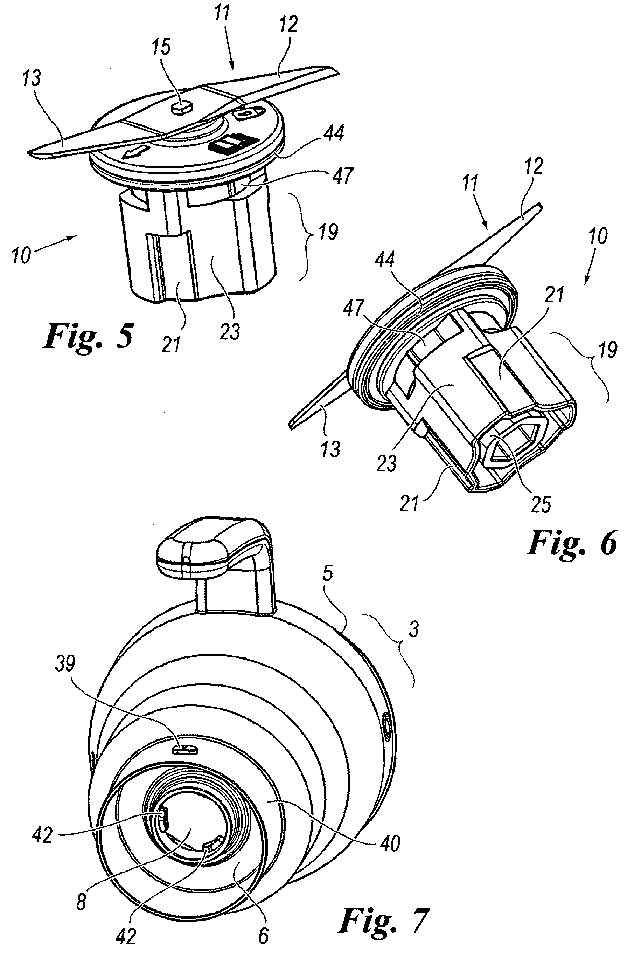

- figures 5 and 6 show a bottom perspective view of a further part of the blender shown in figure 1, respectively;
- figure 7 shows a bottom perspective view of that part of the blender which is shown in figure 3.

With reference to the mentioned figures, a blender is generically indicated by numeral reference 1 and comprises a base 2 and a vessel or can 3 open in 4 at its first upper end 5 (where a usual closing member or cover, not shown in the figures, is located); the can comprises a second (lower) end or bottom 6 open in 8 where there is a holder 10 holding a blade 11 comprising two sharp portions 12 and 13 projecting from a blade-holder shaft 15. The can comprises an inner cavity 16 and a handle 17.

The holder 10 for the blade 11 (or "blade-holder" 10) comprises a body 19 having an irregular cross-section and presenting a plurality of hollow side flat faces 21 spaced from each other and distributed along its lateral surface 23. In the holder 10 there passes a blade-holder shaft 15 which is associated, in a known manner (e.g. screwed in), at an end 15A of its own, with a hollow body having a polygonal section 25, suitable for being put on a driving shaft 27 projecting from the base 2 towards the can 3 and driven by an electrical motor located inside the latter (not shown in the figures).

More specifically, the base 2 comprises an (upper) surface 30 in which there is a seat 31 for constraining the can 3 to the base and in which there is, and projects, the driving shaft 27. In the terminal section of the latter there is an insert 27A having a polygonal section, so as to be able to cooperate with the body 25 of the blade-holder 10.

The seat 31 is delimited by a wall 35 rising above the surface 30 and featuring cuts or hollows 37, known by themselves, basically shaped like an L made in an inner face 35A of said wall with these hollows 37. With such hollows 37 which are equiangularly distributed on said wall, projecting teeth 39 realized externally to a cylindrical collar 40 projecting from the second end 6 of the can 3, are capable of cooperating. Such a cooperation makes it possible a bayonet coupling of the latter with the base 2. The teeth 39 are located at a specific angular distance from each other corresponding to that of the hollows 37 mentioned above, so as to allow a unique positioning of the can 3 on the base 2.

The lower base has a lower surface 41 suitable for leaning on a flat surface not shown in the figures (for instance that of a table).

In correspondence with the opening 8 of the bottom 6 of the can 3 there are a number of teeth 42 projecting within this opening and capable of cooperating with cuts 47 made in the surface 23 of the holder 10 so as to keep it blocked within these openings. The blade-holder 10 also comprises a gasket 44 which cooperates with the edge of the opening 8 on the bottom 6 of the can 3 to make the latter tight.

In the seat 31, on a bottom section 31 A thereof, an elongated body 46 rises and its dimensions and position (for instance they have a trapezoidal cross-section, such as to give a considerable mechanical strength to such body) are appropriate to cooperate with the body 19 of the blade-holder 10 whenever the can 3 is coupled with the base 2.

For this purpose, after inserting through the opening 4 the body 19 of the holder 10 into the can 3, such holder is inserted into the opening 8. It is then rotated on itself (around a longitudinal axis W coincident with that of the shaft 15) and the teeth 42 of the can 3 fit in the surface 23 of the body 10 of this holder, so as to constrain it to the can. It should be noted that the introduction of said body 19 into the above mentioned opening 8 takes place without any interferences with the teeth 42 thanks to the irregular shape (substantially a three-lobe one) of the cross-section of such body.

The blending can 3, along with the pre-assembled blade-holder 10, is inserted into its respective seat 31 by making the teeth 39 on the can coincide with the cuts 37 on the wall 35. Since there is one compatible position only for the coupling, such insertion is unique.

The can is rotated up to its end-of-stroke in the one direction possible, which is determined by the shaped cuts.

Thanks to the presence of the body 46, a secure assembling of the blender 1 in its individual parts is obtained, hence a safe use by a user. As a matter of fact:
a) if the blade-holder 10 is just inserted into the opening 8, but it is not locked therein by the teeth 42, when the coupling between the can 3 and the base 2 takes place the body 46 pushes such holder within the can, thus preventing its use and making it possible for the user to realize that the component parts have been assembled incorrectly;
b) if the holder 10 is only partially blocked in the opening 8 in a position whereby that part of its body 19 which projects from said opening interferes with the upper surface of the body 46, then it is not possible to position the can 3 onto the base. Conversely, if the holder 10 is correctly constrained to the can, then the coupling of the latter with the base 2 takes place without any problems.

Thanks to the presence of the body 46 operating as a means of consent for the positioning of the holder 10, hence of the blade 11, a correct assembling of the blade-holder 10 to the can 3 is provided, thus preventing any safety-related problems for a user who uses the latter. It goes without saying that the means of consent might even have shapes and dimensions different from those described above (for instance, they might be parallelepipedal or project from the wall 35 of the seat 31) and, likewise, their respective countermeans (determined by the faces 21) might have different arrangements (for instance, they might be cuts or hollows internal to the body 19 of the blade-holder 10) and might open at the lower side thereof.

Such variants are also to be considered as belonging to the scope of the following claims.

## Claims

1. A blender device (1) comprising a base (2) containing an electrical motor suitable for driving a driving shaft (27) outgoing within a seat (31) located on a surface (30) of such base (2) on which a vessel or can (3) is placed suitable for containing a food to be blended, in a terminal part (6) of said can (3) suitable for positioning close to said surface (30) of the base (2) a seat (8) being provided for a holder (10) holding a blade (11) suitable for penetrating into the can (3) and blending the product present therein, said holder (10) holding a through shaft (15) with a first end of which a blade (11) is associated and suitable for cooperating with the driving shaft (27) whenever the can is constrained to said base, the coupling between the can (3) and the base (2) taking place upon a relative rotation of the two latter, in the seat of the driving shaft (27) connection means (46) being present suitable for cooperating with countermeans (21) associated with the blade holder (10), the correct cooperation thereof providing the correct constrain of such holder (10) to the can (3) and a safe use of the blender (1), the means of consent being a body (46) projecting internally to the seat (31) where the driving shaft (27) comes out, the countermeans being determined by hollows (21) cut in a body (19) of the holder (10) that holds the blade (11), **characterized in that** said projecting body (46) rises from a bottom wall (31A) of the seat (31) where the driving shaft (27) is present.

2. A blender device according to claim 1, **characterized in that** said projecting body features a trapezoidal cross-section.

3. A blender device according to claim 1, **characterized in that** the hollows determining the countermeans are a plurality of hollow flat faces (21) spaced from each other and distributed on a lateral surface (23) of the body (19) of the holder (10) that holds the blade (11).

4. A blender device according to claim 1, **characterized in that** the hollows determining the countermeans are internal cavities of the body (19) of the holder (10) that holds the blade (11) opening at the lower side thereof.

5. A blender device according to claim 1, **characterized in that** the seat (31) into which the driving shaft (27) projects is delimited by a cylindrical wall (35) in which cuts or hollows (37) are present suitable for receiving and blocking teeth (39) projecting from a cylindrical collar (40) that projects from the terminal part (6) of the can, the cooperation between said teeth (39) and said hollows (37) constraining the can (3) to the base (2).

6. A blender device according to claim 1, **characterized in that** the holder (10) comprises a body (19) having an irregular cross-section, substantially a three-lobe one, teeth (42) located on the edge of the seat (8) where such holder (10) is inserted cooperating with such body, such cooperation blocking the body (19) in said seat.

## Patentansprüche

1. Mischvorrichtung (1), umfassend einen Sockel (2) mit einem Elektromotor, der zum Antreiben einer abgehenden Antriebswelle (27) im Inneren eines Sitzes (31) dient, der auf einer Fläche (30) des derartigen Sockels (2) angeordnet ist, worauf ein Behälter oder ein Gefäß (3) angeordnet ist, das dazu geeignet ist, die zu mischenden Nahrungsmittel aufzunehmen, wobei in einem Endteil (6) des Gefäßes (3), das geeignet ist, nahe der Fläche (30) des Sockels (2) einen Sitz (8) anzuordnen, der für einen Halter (10) zum Halten einer Klinge (11) vorgesehen ist, die geeignet ist, in das Gefäß (3) einzudringen und das darin befindliche Produkt zu mischen, wobei der Halter (10) eine durchgehende Welle (15) hält, deren erstes Ende mit einer Klinge (11) zugeordnet ist, die geeignet ist, mit der Antriebswelle (27) zusammenzuwirken, wenn das Gefäß an dem Sockel festgelegt ist, wobei die Kopplung zwischen dem Gefäß (3) und dem Sockel (2) durch eine Relativdrehung der beiden letztgenannten erfolgt, wobei in dem Sitz der Antriebswelle (27) Verbindungsmittel (46) vorhanden sind, die für das Zusammenwirken mit Gegenmitteln (21) geeignet sind, die mit dem Klingenhalter (10) zugeordnet sind, wobei deren korrektes Zusammenwirken für die korrekte Befestigung eines solchen Halters (10) an dem Gefäß (3) und eine sichere Verwendung der Mischvorrichtung (1) sorgt, wobei das Mittel zur Erlaubnis ein Körper (46) ist, das nach innen zum Sitz (31) hin auskragen, wo die Antriebswelle (27) abgeht, wobei die Gegenmittel durch Vertiefungen (21) bestimmt sind, die in einem Körper (19) des Halters (10) ausgeschnitten sind, der die Klinge (11) hält, **dadurch gekennzeichnet, dass** der auskragende Körper (46) aus einer Bodenwand (31A) des Sitzes (31) aufgeht, wo die Antriebswelle (27) vorhanden ist.

2. Mischvorrichtung nach Anspruch 1, **dadurch gekennzeichnet, dass** der auskragende Körper einen trapezförmigen Querschnitt aufweist.

3. Mischvorrichtung nach Anspruch 1, **dadurch gekennzeichnet, dass** die Vertiefungen, die die Gegenmittel bestimmen, mehrere flache, hohle Seiten (21) sind, die voneinander beabstandet und über eine Seitenfläche (23) des Körpers (19) des Halters (10), der die Klinge (11) hält, verteilt sind,.

4. Mischvorrichtung nach Anspruch 1, **dadurch gekennzeichnet, dass** die Vertiefungen, die die Gegenmittel bestimmen, innere Hohlräume des Körpers (19) des Halters (10) sind, der die Klinge (11) hält, die in die Unterseite desselben einmündet.

5. Mischvorrichtung nach Anspruch 1, **dadurch gekennzeichnet, dass** der Sitz (31), in den die Antriebswelle (27) hineinragt, durch eine zylinderförmige Wand (35) begrenzt wird, in der Einschnitte oder Vertiefungen (37) vorhanden sind, die zum Aufnehmen und Sperren von Zähnen (39) geeignet sind, die aus einem zylinderförmigen Bund (40) auskragen, der aus dem Endteil (6) des Gefäßes auskragt, wobei das Zusammenwirken zwischen den Zähnen (39) und den Vertiefungen (37) das Gefäß (3) an dem Sockel (2) festlegt.

6. Mischvorrichtung nach Anspruch 1, **dadurch gekennzeichnet, dass** der Halter (10) einen Körper (19) mit einem unregelmäßigen, im Wesentlichen dreilappigen Querschnitt und Zähne (42) umfasst, die auf der Kante der Sitzes (8) angeordnet sind, wo ein solcher Halter (10) eingefügt ist und mit einem solchen Körper zusammenwirkt, wobei ein solches Zusammenwirken den Körper (19) in dem Sitz sperrt.

## Revendications

1. Dispositif mixeur (1) comprenant une base (2) contenant un moteur électrique adapté pour entraîner un arbre d'entraînement (27) sortant à l'intérieur d'un siège (31) situé sur une surface (30) de cette base (2) sur laquelle un récipient ou bidon (3) est placé, adapté pour contenir un aliment à mixer, dans une partie terminale (6) dudit bidon (3) adaptée pour se positionner près de ladite surface (30) de la base (2) un siège (8) étant disposé pour un support de fixation (10) maintenant une lame (11) adaptée pour pénétrer dans le bidon (3) et mixant le produit présent à l'intérieur de celui-ci, ledit support de fixation (10) supportant un arbre traversant (15) à une première extrémité duquel est associée une lame (11) et adapté pour coopérer avec l'arbre d'entraînement (27) chaque fois que le bidon est fixé à ladite base, l'accouplement entre le bidon (3) et la base (2) s'effectuant avec une rotation relative de ces deux éléments, dans le siège de l'arbre d'entraînement (27) étant disposés des moyens de connexion (46) adaptés pour coopérer avec des moyens complémentaires (21) associés au support de fixation de lame (10), la coopération correcte de ceux-ci fournissant le blocage correct de ce support de fixation (10) avec le bidon (3) et une utilisation sécurisée de mixeur (1), les moyens d'autorisation étant un corps (46) faisant saillie à l'intérieur du siège (31) où sort l'arbre d'entraînement (27), les moyens complémentaires étant déterminés par des cavités (21) découpées dans un corps (19) du support de fixation (10) qui supporte la lame (11), **caractérisé en ce que** ledit corps en saillie (46) monte au-dessus d'une paroi de fond (31A) du siège (31) où se trouve l'arbre d'entraînement (27).

2. Dispositif mixeur selon la revendication 1, **caractérisé en ce que** ledit corps en saillie présente une section transversale trapézoïdale.

3. Dispositif mixeur selon la revendication 1, **caractérisé en ce que** les cavités déterminant les moyens complémentaires sont une pluralité de faces plates creuses (21) espacées entre elles et distribuées sur une surface latérale (23) du corps (19) du support de fixation (10) qui supporte la lame (11).

4. Dispositif mixeur selon la revendication 1, **caractérisé en ce que** les cavités déterminant les moyens complémentaires sont des cavités internes du corps (19) du support de fixation (10) qui supporte la lame (11) s'ouvrant au niveau d'un côté inférieur de celles-ci.

5. Dispositif mixeur selon la revendication 1, **caractérisé en ce que** le siège (31) dans lequel l'arbre d'entraînement (27) fait saillie est délimité par une paroi cylindrique (35) dans laquelle sont présentes des découpes ou cavités (37) adaptées pour recevoir et bloquer des dents (39) faisant saillie à partir d'un collier cylindrique (40) qui fait saillie à partir de la partie terminale (6) du bidon, la coopération entre lesdites dents (39) et lesdites cavités (37) bloquant le bidon (3) sur la base (2).

6. Dispositif mixeur selon la revendication 1, **caractérisé en ce que** le support de fixation (10) comprend un corps (19) ayant une section transversale irrégulière, sensiblement une section à trois lobes, des dents (42) situées sur le bord du siège (8) où est inséré ce support de fixation (10) coopérant avec ce corps, une telle coopération bloquant le corps (19) dans ledit siège.
